# EUROPEAN PATENT APPLICATION

(11) **EP 1 884 750 A2**
(43) Date of publication of application: **06.02.2008**
(21) Application number: 07113130.4
(22) Date of filing: 25.07.2007
(51) Int. Cl.: G01D 11/30

(54) **Supporting hanger, in particular for sensors of alarm systems, and related sensor**

(30) Priority: 25.07.2006 IT RM20060399
(71) Applicant: Lince Italia S.p.A., 00043 Ciampino (RM) (IT)
(72) Inventor: Mercuri, Alessandrino; c/o LINCE ITALIA S.p.A., I-00043 Ciampino (RM) (IT)
(74) Representative: Leone, Mario

(57) **Abstract**

Supporting hanger (3), in particular for alarm system sensors, allows to activate alarm in case of removal by eradication of the supporting hanger (3) of the seat thereof, and to this purpose it comprises: a base plate (6) placed between a pedestal (5) of the supporting hanger (3) to be applied to the wall and the wall; first fixing means (7) of said supporting hanger (3) to said base plate (6); second fixing means (9) of said base plate (6) to the wall; and means for detecting (14)the detachment of the pedestal (5) of the supporting hanger (3) from said base plate (6), positioned on a portion (11) of said base plate (6)and connected to the alarm system.

## Description

The present invention is related to a supporting hanger, in particular for sensors of alarm systems, and to a sensor incorporating such a hanger.

Various typologies of hangers as above specified are known, they are usually fixed to a wall or to a ceiling by mans of screw anchors or the like, and they are connected to an alarm system unit through a wire or a wireless system.

One way for tampering the alarm system could be to take away the whole sensor, including the hanger thereof, also for making ineffective systems, inside the sensor, sensitive to the tampering thereof or to the orientation thereof.

In these contingencies, the removal of the whole sensor, and thus the eradication of the supporting hanger, could constitute an alarm system tampering attempt.

The eradication, in spite of the tenacity of the anchors to remain fixed to the wall, could be carried out even breaking, in the eradication action, a base portion of the hanger which, being generally made of plastics, cannot be fully unbreakable.

Differently, an ill-intentioned person could operate cutting the link between hanger and wall, through the gap between the hanger edge and the wall, thereby succeeding to thwart also possible means for detecting the detachment of the hanger from the wall.

The technical problem underlying the present invention is to provide a supporting hanger, and then a sensor incorporating such hanger, allowing to obviate to the drawbacks cited with reference to the prior art.

Such a problem is solved by a supporting hanger, in particular for alarm system sensors, comprising: a base plate placed between the hanger pedestal to be applied to the wall and the wall; first fixing means linking the hanger to the base plate and second fixing means linking the base plate to the wall; and means for detecting the detachment of the hanger pedestal from the base plate, positioned on a portion of said base plate and connected to the alarm system.

By virtue of the above defined hanger, an attempt to eradicate the hanger would result in the detachment of the hanger from the base plate, thus causing the activation of the alarm system.

In a preferred embodiment, the portion of said base plate is delimited by a breakable weakened line so as to keep at least such a portion anchored to the wall.

The invention also concerns to a sensor, in particular for alarm systems, comprising a supporting hanger as previously defined.

The main advantage of the supporting hanger according to the present invention lies in allowing the activation of the alarm in case of tampering attempt with eradication of the hanger.

The present invention will be hereinafter disclosed according to one preferred embodiment thereof, provided to an exemplificative and non-limitative purpose, with reference to the annexed drawings wherein:
* Figure 1 shows a perspective view of a sensor incorporating a supporting hanger according to the invention:
* Figure 2 shows a front perspective view of a detail of the supporting hanger of Figure 1; and
* Figure 3 shows a rear perspective view of the detail of Figure 2.

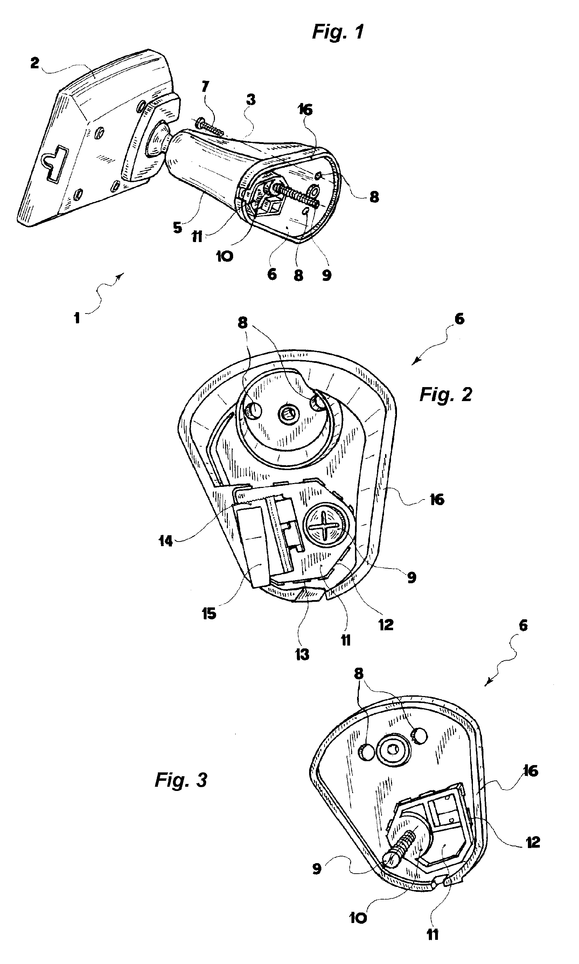

In connection with Figure 1, a sensor, of the kind used in alarm systems for detecting the presence of intruders, is globally indicated as 1.

It comprises a sensor body 2, housing the sensing members of the sensor 1, and a supporting hanger 3, in the present embodiment provided with an articulated joint 4 at the sensor body 2, to allow the latter to be orientated to effectively cover an area to be watched over.

The hanger is intended to be fixed to a wall or to a ceiling, generally to any flat surface, and in this connection it comprises a pedestal 5 apt to be applied to said surface.

At the pedestal 5, the hanger 3 comprises a base plate 6, intended to be applied in a place between the pedestal 5 of the hanger and the wall to which the hanger is applied.

Further and in general, the hanger 3 comprises first fixing means of said hanger to said base plate 6, embodied by screws 7 in the present embodiment, which can be inserted in suitable holes 8 in the base plate 6.

Further, the hanger 3 comprises second fixing means for the base plate 6 to the wall, consisting, always in the present embodiment, in a further screw 9, of the kind apt to be inserted into the wall thank to a suitable screw anchor, intended to pass through the thickness of the base plate 6 at a respective second fixing hole 10, formed therein. This screw 9 of the second fixing means does not pass through the pedestal 5 of the hanger 3 but is intended to anchor only the base plate 6 to the wall. In particular, the head 9' of the screw 9 cooperates with the base plate 6 for linking the latter to the wall, keeping it in the position thereof.

The second fixing hole 10 o the base plate 6 is formed at a portion 11 of the base plate 6, delimited by a breakable weakened line 12, obtained through a linear series of passing-through notches 13.

At the portion 13, the hanger 3 comprises means for detecting the detachment of the pedestal 5 of the hanger 3 from the base plate 6. Such means for detecting are conveniently connected to the alarm system and comprises a micro-switch 14 arranged to close a circuit when the hanger 3 and the base plate 6 are fixed to the wall.

As a matter of fact, the button 15 of the micro-switch is pressed between the hanger 3 and the base plate 6, so as to sense the presence of the hanger 3 with respect to the base plate 6.

In the present embodiment, the base plate has a raised edge 16, shaped so as to hide the end edge of the pedestal 5 after the installation to the wall. In this way, the gap comprised between the pedestal 5 and the base plate 6 is completely obstructed.

Analogously, the pedestal 5 of the hanger could completely hide the base plate 6, the latter becoming thus invisible after the installation to the wall.

A connection between the pedestal 5 and the base plate 6 may be provided, e.g. thank to a snap mechanism apt to cooperate with or to replace the screw 7.

In connection with the operation, the application of the hanger 3 is carried out by fixing to the wall the base plate, using the corresponding screw 9. At this point, the micro-switch 14 is connected to the alarm system and the circuit thereof is closed by the fitting of the hanger, i.e. of the pedestal 5 thereof on the base plate 6, and with the corresponding screw 7.

If an ill-intentioned person tries to eradicate the hanger 3 from the wall, applying an adequate eradication force, the breaking of the hanger happens, or anyway the separation thereof from the base plate 6, however kept into its place by the second fixing means, with the consequent activation of the micro-switch 14, opening its own circuit and running the alarm.

Advantageously, the material of the base plate 6 can have a traction breaking strength lower than that of the material of the supporting hanger 3. Moreover, the required force for breaking said weakened line 12 will be lower than that required for detaching, by eradication, the base plate 6 and the pedestal 5, by virtue of the above mentioned connection therebetween.

To the above described supporting hanger and sensor incorporating it a man skilled in the art, to achieve further and contingent demands, may introduce several further changes and variations, however all falling within the protection scope of the present invention, as defined by the annexed claims.

## Claims

1. Supporting hanger (3), in particular for alarm system sensors, comprising:
* a base plate (6) placed between a pedestal (5) of the supporting hanger (3) to be applied to the wall and the wall;
* first fixing means (7) of said supporting hanger (3) to said base plate (6);
* second fixing means (9) of said base plate (6) to the wall; and
* means for detecting (14)the detachment of the pedestal (5) of the supporting hanger (3) from said base plate (6), positioned on a portion (11) of said base plate (6)and connected to the alarm system.

2. Supporting hanger (3) according to claim 1, wherein the portion 811) of said base plate (6) is delimited by a breakable weakened line (12) so as to keep at least this portion (11) anchored to the wall.

3. Supporting hanger (3) according to claim 2, wherein said breakable weakened line (12) is formed by a linear series of passing through notches (13).

4. Supporting hanger (3) according to any of the preceding claims, wherein the fixing means comprises one or more screws (7, 9), apt to be fixed to the wall, wherein the head (9') is arranged to keep said base plate (6) in the position thereof.

5. Supporting hanger (3) according to any of the preceding claims, wherein the means for detecting the detachment of the pedestal (5) of the supporting hanger (3) from said base plate (6) comprises a micro-switch (14).

6. Supporting hanger (3) according to claim 5, wherein said micro-switch (14) is arranged to close a circuit when the supporting hanger (3) and the base plate (6) are fixed to the wall, said micro-switch (14) sensing the presence of the supporting hanger (3) with respect to the base plate (6).

7. Supporting hanger (3) according to any of the preceding claims, wherein the material of the base plate (6) has a traction breaking strength lower than that of the material of the supporting hanger (3).

8. Supporting hanger (3) according to any of the preceding claims, wherein the base plate (6) has a raised edge (16), shaped so as to hide the end edge of the pedestal (5) after the installation to the wall. such that the gap comprised between the pedestal (5) and the base plate (6) is completely obstructed.

9. Supporting hanger (3) according to any of the preceding claims from 1 to 7, wherein the pedestal (5) of the supporting hanger (3) completely hides the base plate (6), the latter becoming thus invisible after the installation of the supporting hanger (3) to the wall.

10. Sensor (1), in particular for alarm systems, comprising a supporting hanger (3) according any of the preceding claims.
